# EUROPÄISCHE PATENTSCHRIFT

(11) **EP 2 728 307 B1**
(45) Veröffentlichungstag und Bekanntmachung des Hinweises auf die Patenterteilung: **14.06.2017**
(21) Anmeldenummer: 13005155.0
(22) Anmeldetag: 30.10.2013
(51) Int. Cl.: G01B 11/25, A61C 9/00

(54) **Verfahren und Vorrichtung zur optischen 3D-Vermessung von Zähnen mit Fluoreszenzstrahlung**
Method and arrangement for the optical 3D measurement of teeth based on fluorescence
Procédé et dispositif de mesure optique 3D de dents basée sur la fluorescence

(30) Priorität: 30.10.2012 DE 102012021185
(43) Veröffentlichungstag der Anmeldung: 07.05.2014
(73) Patentinhaber: smart optics Sensortechnik GmbH, 44801 Bochum (DE)
(72) Erfinder: Lampalzer, Ralf, 58456 Witten (DE)
(74) Vertreter: Verscht, Thomas Kurt Albert

(56) Entgegenhaltungen:
- DE-B4-102007 058 590
- US-A- 4 479 499
- US-A1- 2007 248 931
- ALBIN S ET AL: "LASER INDUCED FLUORESCENCE OF DENTAL CARIES", PROCEEDINGS OF SPIE, S P I E - INTERNATIONAL SOCIETY FOR OPTICAL ENGINEERING, US, Bd. 907, 16. Januar 1988 (1988-01-16), Seiten 96-98, XP000570174, ISSN: 0277-786X

## Beschreibung

Die Erfindung betrifft allgemein eine Technik zur Erfassung der Oberflächenform von Zähnen mit Methoden der optischen 3D-Messtechnik. Dies dient zur dreidimensionalen (3D-) Vermessung von Zähnen im Mund. Dieses Verfahren wird auch als "digitale Abdrucknahme" bezeichnet.

Für Zähne finden verschiedene optische Messverfahren Anwendung, welche auf aktiver oder passiver Triangulation basieren: Phasenmessende Triangulation eines Streifenmusters, wie dies etwa beschrieben ist in den US-Patentschriften: M. B. Werner H. Moermann, "Verfahren und Vorrichtung für die Herstellung kundensprezifisch geformter Implantate", US Patent 4575805, 1984 und G. E. Company, "Kontaktfreie Messung von Oberflächenprofilen", US Patent 4349277, 1980. Andere Arten von Streifenprojektion sind beschrieben in:
S. D. G. Systems, "3D-Kamera zur Erfassung von Oberflächenstrukturen", DE 4027328, 1990; K. &. V. GmbH, "Optische Sonde zur absoluten 3-dimensionalen Vermessung von Einzelzähnen und Zahngruppen in der Mundhöhle", DE 3933994, 1989;
I. G. f. Sondermaschinenbau, "Verfahren und Vorrichtung zur berührungslosen Messung von Gestaltsabweichungen an Oberflächen", DE 3919893, 1989;
P. D. 6. R. D. Heitlinger und F. 6. W. D. Rödder, "Verfahren zur Herstellung von Zahnersatz und Vorrichtung zur Durchführung des Verfahrens", DE 2936847, 1979; und
A. D. Becker Dental-Labor GmbH, "Verfahren und Vorrichtung zur Herstellung eines Kronenteiles". DE 3003435 , 1980 .

"Verfahren zur dreidimensionalen Messung mit wenigen projizierten Mustern ", US 4648717,1985.

Passive Stereoverfahren sind beschrieben in N. D. Steinbichler Optotechnik GmbH, "Vorrichtung zur Ermittlung der 3D-Koordinaten eines Objekts, insbesondere eines Zahns", DE 102007060263, 2007.

Aktive Stereoverfahren, aktive und passive Multi-Basislinien-Stereoverfahren sind beschreiben in: B. M. Gregory D. Hager und E. L. Wegbreit, "Aufnahme von dreidimensionalen Bildern durch aktives Stereoverfahren unter Anwendung lokal einzigartiger Muster", US 7103212, 2003 und M. N. Solid Photography Inc, "Anordnung zum Erfassen der geometrischen Eigenschaften eines Objekts", US 4175862, 1975.

Passives Multi-Basislinien-Stereo durch rotierende Aperturblende ist beschrieben in F. Frigerio, "3-Dimensionale Oberflächenabbildung unter Anwendung von aktiver Wellenfrontabtastung". US 1995/2006.
Die Unterscheidung aktiver oder passiver Verfahren zur Triangulation erfolgt danach, ob ein auszuwertendes Muster gleich welcher Art auf das Messobjekt projiziert wird (aktive Verfahren) oder nicht (passive Verfahren). Der Name "Triangulation" beruht darauf, dass die Kamera, der Projektor und der Punkt der Reflexion auf dem Messobjekt ein Dreieck bilden.

Ebenfalls wird das konfokale Messverfahren eingesetzt. Dieses basiert anders als die vorgenannten Verfahren auf der Analyse der lokalen Bildschärfe bzw. des lokalen Kontrastes eines mittels eines optischen Systems mit großer Apertur auf das Messobjekt projizierten Lichtpunktes, wie dies beschrieben ist in "Verfahren und Anordnung für eine schnelle und zuverlässige konfokale 3D Messtechnik", US 7787132-B2, 2007 und S. D. S. GmbH, "Messgerät und Verfahren, die gemäß den grundlegenden Prinzipien der konfokalen Mikroskopie arbeiten", US 7679723-B2, 2005.

Die genannten optischen Messverfahren verfügen im Allgemeinen über ein Beleuchtungssystem, welches Licht auf die Zähne bringt, und ein Beobachtungssystem, welches das Licht nach seiner Wechselwirkung mit dem Zahn unter Zuhilfenahme einer Rechen- und Auswerteeinheit analysiert.
Im Gegensatz zu den meisten technischen Messobjekten weisen menschliche Zähne eine ausgeprägte Transluzenz auf.

Im deutschen Patent "Verfahren und Vorrichtung zur optischen Erfassung von Oberflächenstrukturen an Zähnen", DE 40 34 007 C2, 1990, ist offenbart, die Zähne mit einer Fluoreszenzfarbe, insbesondere Fluorescein, zu beschichten, um das Problem der Transluzenz zu umgehen.
(A) Eine andere übliche Methode zur Vermeidung der Transluzenz stellt das Beschichten der Zähne mit einem streuenden Material dar, z.B. Titandioxidpulver, wie dies im zuvor genannten Dokument in Spalte 1, Zeile 37, beschrieben ist.
(B) In DE 102007058590-B4 ist offenbart, die Zähne mit einer dünnen Lichtlinie zu beleuchten, die dann infolge der Transluzenz zu einer streifenmuster-ähnlichen Struktur aufgeweitet wird, und damit das Messverfahren der Streifenprojektion durchzuführen.
(C) Nachteilig an den Lösungen (A) und (B) ist die Notwendigkeit, die Zähne zu präparieren. Dieser Schritt ist zum einen ein weiterer Arbeitsgang, der mit Aufwand verbunden ist. Zum anderen werden sehr sensible Bereiche beschichtet. Das Beschichtungsmittel muss wieder entfernt werden, weil es die Klebeverbindung von Zahn und Zahnersatz stören würde. Der Nerv des Zahns kann nicht vom Beschichtungsmittel ohne Beeinträchtigung des Nervs gereinigt werden. Andererseits kann der Nerv auch nicht von der Präparation ausgenommen werden, da die komplette Geometrie erfasst werden muss.

US 2007/0248931 A1 beschreibt ein Verfahren und eine Bilderfassungsvorrichtung zur Erkennung von Karies, insbesondere zur Erkennung in einem frühen Entstehungsstadium und in den Zahnzwischenräumen. Hierbei werden Bilddaten basierend auf dem Fluoreszenzeffekt und auf Reflexionseffekten gewonnen und miteinander kombiniert. Bei der Auswertung der Fluoreszenzaufnahmen wird der Effekt genutzt, dass unterschiedliche Fluoreszenzeffekte bei kariesbehafteten und bei gesunden Zahnstrukturen wahrgenommen werden können.

Der Artikel von Albin et al. "Laser Induced Fluorescence of Dental Caries", Proceedings of SPIE, SPIE - International Society for Optical Engineering, US, Bd. 907, 16. Januar 1988, Seiten 96-98, ISSN: 0277-786X beschreibt ein optisches Verfahren zur frühzeitigen Erkennung von kariesbehafteten Bereichen eines Zahnes. Es können kariesbehaftete Bereiche von gesunden Bereichen eines Zahns mit Hilfe von Fluoreszenzspektroskopie erkannt werden. Hierfür wird mit Licht einer ersten Wellenlänge auf einen Zahn geleuchtet und anschließend wird eine Emissionswellenlänge des Lichtes nach Austritt aus dem Zahn als zweite Wellenlänge gemessen. Hierbei ergeben sich Verschiebungen in der Emissionswellenlänge, wenn man gesundes Zahnmaterial mit kariesbehafteten Zahnmaterial vergleicht, da kariesbehaftete Bereiche eine veränderte physikalische Struktur und eine andere chemische Zusammensetzung aufweisen im Vergleich zu gesundem Zahnmaterial.

US 4 479 499 A1 beschreibt ein Verfahren und eine Vorrichtung zur Erkennung von Karies in menschlichen Zähnen unter Verwendung von sichtbarem Licht. Hierbei wird der Effekt genutzt, dass kariesbehaftete Bereiche und nicht kariesbehaftete Bereiche bei Lichtbestrahlung unterschiedlich bei verschiedenen Frequenzen reagieren. Hierzu wird ein monochromes Licht verwendet und die Intensität der sichtbaren Lumineszenzstrahlung bei einer ersten Wellenlänge und bei einer zweiten Wellenlänge gemessen.

Es ist die Aufgabe der vorliegenden Erfindung, die zuvor beschriebenen Einschränkungen insbesondere im Hinblick auf die Transluzenz zu beheben oder zumindest zu verringern.

Die Aufgabe wird gelöst durch ein Verfahren nach Patentanspruch 1. Ferner wird die Aufgabe gelöst durch eine Vorrichtung nach Patentanspruch 9.

Bevorzugterweise ist die mindestens eine Emissionswellenlänge eine oder mehrere der folgenden Gruppe sind: 350 nm, 400 nm, 450 nm und 520 nm. Wie im Folgenden in weiterer Einzelheit näher erläutert wird, sind dies Fluoreszenzwellenlängen.

In einer bevorzugten Ausführungsform der Erfindung ist der Bereich der mindestens einen Emissionswellenlänge, in welchem Licht erfasst oder beobachtet wird, ungefähr ± 30 nm, und vorzugsweise ± 20 nm, um die mindestens eine Emissionswellenlänge herum ist. Von der Erfindung umfasst sind allerdings auch Bereiche von ungefähr ± 40 nm, ± 39 nm, ± 38 nm , ± 37 nm , ± 36 nm , ± 35 nm , ± 34 nm , ± 33 nm , ± 32 nm, ± 31 nm, ± 30 nm, ± 29 nm, ± 28 nm, ± 27 nm, ± 26 nm, ± 25 nm, ± 24 nm, ± 23 nm, ± 22 nm, ± 21 nm, ± 20 nm, ± 19 nm, ± 18 nm, ± 17 nm, ± 16 nm, 15 nm, ± 14 nm, ± 13 nm, ± 12nm, ± 11 nm, ± 10 nm, ± 9 nm, ± 8 nm, ± 7 nm, ± 6 nm, ± 5 nm, ± 4 nm, ± 3 nm, ± 2 nm oder ± 1 nm um eine oder mehrere der Emissionswellenlängen, wobei auch für unterschiedliche Emissionswellenlängen ein unterschiedlich großer Bereich vorgesehen sein kann. Beispielsweise kann daher gleichzeitig Licht in den Bereichen von 450 nm ± 31 nm und 520 nm ± 19 nm erfasst oder beobachtet werden usw.

Vorteilhafterweise erfolgt die Beleuchtung im Spektralbereich 370 bis 420 nm, und vorzugsweise in den Spektralbereichen 370 bis 390 nm und/oder 400 nm bis 420 nm.

Ferner ist bevorzugt, dass der Bereich mindestens einer Anregungswelle für Fluoreszenz, in welchem Licht emittiert wird, und der Bereich der mindestens einen Emissionswellenlänge, in welchem bzw. welchen Licht erfasst wird, disjunkt sind. Der Anregungswellenlängenbereich ist daher verschieden von bzw. nicht-überlappend zu dem beobachteten Emissionwellenlängenbereich, was besonders vorteilhaft für die erfindungsgemäße Ausnutzung der Fluoreszenz ist, da es hierbei zwischen Anregung und Emission zu einer Frequenzverschiebung kommt. Auf diese Weise wird auch die Qualität der Signalauswertung verbessert, da Photonen, welche nicht durch Fluoreszenz emittiert wurden, von der Beobachtung bzw. Erfassung ausgeschlossen sind.

Vorteilhafterweise weist eine Filterkennlinie eines optischen Filters im Strahlengang vor der Lichterfassung Transmission bei der mindestens einen Emissionswellenlänge auf. Es ist daher vor der Beobachtungseinheit ein Filter vorgesehen, welcher eine Transmissionskennlinie aufweist, welche den Bereich der mindestens einen Emissionswellenlänge, in welchem Licht erfasst wird, durchlässt, wobei andere Frequenzbereiche abgeschnitten werden. Beispielsweise weist der bzw. die Filter eine Transmission nur in den Bereichen 450 nm ± 31 nm und 520 nm ± 19 nm auf.

Vorteilhafterweise sind die Zähne nicht präpariert, so dass das Anregungslicht in den Zahn eindringen kann.

Die vorliegende Erfindung beruht auf der Anwendung von Fluoreszenz, wobei eingestrahltes Licht die Zahnsubstanz in der Tiefe, also im Inneren oder im Volumen des Zahnes zur Aussendung von Fluoreszenzstrahlung anregt, die dann wiederum von einer Beobachtungseinheit ausgewertet werden kann. Die Beleuchtungseinheit und die Beobachtungseinheit sind vorzugsweise als Handgerät vorgesehen.

Die anregende Strahlung kann dabei so gewählt werden, dass sie in einem besonders geeigneten Spektralbereich, etwa von 370 nm bis 420 nm, liegt.

Die optische Vermessung mittels der beobachteten Fluoreszenzstrahlung kann dann unter Verwendung eines geeigneten Verfahrens erfolgen, etwa nach dem Stereoverfahren oder Multi-Basislinien-Stereo-Verfahren. Dabei kann die Beobachtungseinheit ein feines Markierungsmuster projizieren.

Durch die vorliegende Erfindung kann eine aufwendige Präparierung der Zähne vermieden werden, wobei aber dennoch eine zuverlässige geometrische Erfassung erfolgt.

Weitere vorteilhafte Ausführungsformen sind den abhängigen Ansprüchen sowie auch der weiteren Beschreibung zu entnehmen.

Die Erfindung wird mit Bezug zu den angefügten Zeichnungen detaillierter beschrieben. In den Figuren zeigen:
- Fig. 1: eine Schnittansicht (11) und eine Draufsicht (12) zur Darstellung der Lichtausbreitung in einem transluzenten Gewebe,
- Fig. 2: die erhöhte Absorption durch Fluoreszenz, die erfindungsgemäß ausgenutzt wird, um die Transluzenz zu verringern, und
- Fig. 3: eine Vorrichtung zur Implementierung des Konzepts der Fluoreszenz in der Tiefe bzw. im Volumen, wobei in dieser Ausführungsform ein aktives Stereoverfahren und ein Multi-Basislinien-Stereoverfahren eingerichtet ist und ein feines Markierungsmuster projiziert wird.

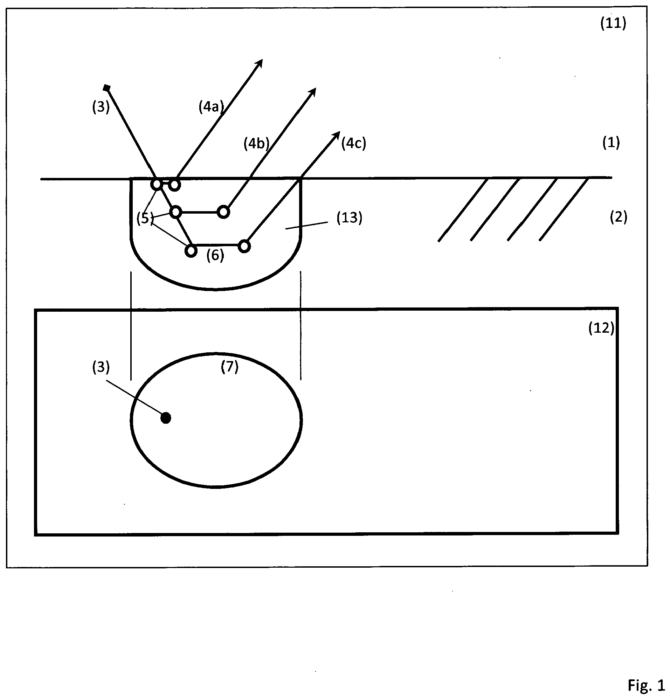

Die Ausbreitung von Licht im transluzenten Gewebe ist in Fig. 1 dargestellt, und zwar zum einen in einem Schnittbild 11 an der Grenzfläche zwischen Luft 1 und Zahnmaterial 2 und zum anderen in einer Draufsicht 12.

Ein Lichtstrahl 3 der Wellenlänge λ0 wird mit einer Beleuchtungseinheit auf die Zähne geworfen. Ein Großteil des Lichtes dieses Strahls dringt tief in den Zahn ein und wird unter der Zahnoberfläche einmal oder mehrfach an Streuzentren 5 gestreut bis es als gestreutes Licht 4 wieder austritt und in die Eintrittspupille des Beobachtungssystems gelangt. In der Literatur, z.B. in "Optische Eigenschaften des Zahnbeins". Patent J.J. ten Bosch and J.R. Zijp. In: "Zahnbein und Zahnbeinreaktionen in der Mundhöhle", A. Thylstrup, S.A. Leach and V. Qvist, Hrsg. (IRL Press Ltd, Oxford, England, 1987) S. 59-65, sind Zahlenwerte für den Streukoeffizienten zu finden, er wird mit Werten zwischen 3 mm⁻¹ bis 8 mm⁻¹ angegeben. Diese Streuzentren 5 sind also nur mit geringer Dichte vorhanden, daher ist die Reichweite R0 mehrfach gestreuter Lichtstrahlen 6 im Inneren bzw. im Volumen des Zahnes relativ groß. Aus den genannten Streukoeffizienten kann man näherungsweise die Größenordnung von 1mm für R0 ableiten. Entsprechend ist die Punktantwort (Punktspreizfunktion, engl. point-spread-function, PSF) eines auf den Zahn projizierten Punktes ein ausgedehntes Punktbild 7 mit zudem reduziertem Kontrast.

Die Signalentstehung findet in einem großen Signalentstehungsvolumen 13 statt; anstelle einer Reflexion in einem Punkt, wie vom Messprinzip "Triangulation" postuliert, ist das gesamte Volumen an der Rückstreuung beteiligt, entsprechend unscharf kann auf den Ort der Streuung zurückberechnet werden, also ist die Messung ungenau.

Erfindungsgemäß wird die "tiefe Fluoreszenz" im Inneren des Zahnes bzw. die Fluoreszenz des Volumens des Zahnes genutzt, um den Mechanismus der Signalentstehung zu verbessern. Das Signalentstehungsvolumen 13 wird in der Tiefe zur Fluoreszenz angeregt; wie gezeigt werden wird, verkleinert dies die Punktantwort.

Das Gewebe natürliche Zähne weisen in folgenden Spektralbereichen Fluoreszenz auf:

| Maximale Anregung | Emission | Chromophor |
|---|---|---|
| 300 nm | 350 | Spuren von Trypthophan |
| 325 nm | 400 | Hydroxypyridinium |
| 380 nm | 450 | unbekannt |
| 410 nm | 520 | unbekannt |

Diese Eigenschaften gelten sowohl für Zahnbein (engl./lat. Dentin) und Zahnschmelz (engl. Enamel / lat. Enamelium). Diese Daten sind der zuvor zitierten Schrift zu entnehmen.

Erfindungsgemäß wird die Wellenlänge λ1 des Lichtes welches in das Gewebe des Zahns eindringt so gewählt, dass der Zahn bei dieser Wellenlänge λ1 zu Fluoreszenz angeregt wird.

Die Energie des entsprechenden Photons P1 ist: E1=h*c/ λ1 (c: Lichtgeschwindigkeit, h: Planck'sches Wirkungsquantum).

Das Photon soll also erfindungsgemäß im Zahnvolumen eine molekulare Umgebung vorfinden, welche eine Energieniveaustruktur aufweist, welche geeignet ist, einen Fluoreszenzprozess ablaufen zu lassen.

Erfindungsgemäß wurde erkannt, dass dies vorteilhaft ist, da bei diesem Prozess das Photon absorbiert wird, und somit das Zahngewebe bei dieser Wellenlänge eine erhöhte Absorption aufweist.

Erfindungsgemäß wird dies genutzt, um die Transluzenz der Zähne zu vermeiden oder zu verringern. Bei dem Mechanismus der Transluzenz dringt, wie bereits erwähnt, Licht in den Zahn ein, legt dort eine Wegstrecke der Länge R0 zurück, verlässt den Zahn wieder und trifft in die Eintrittspupille des Beobachtungssystems.

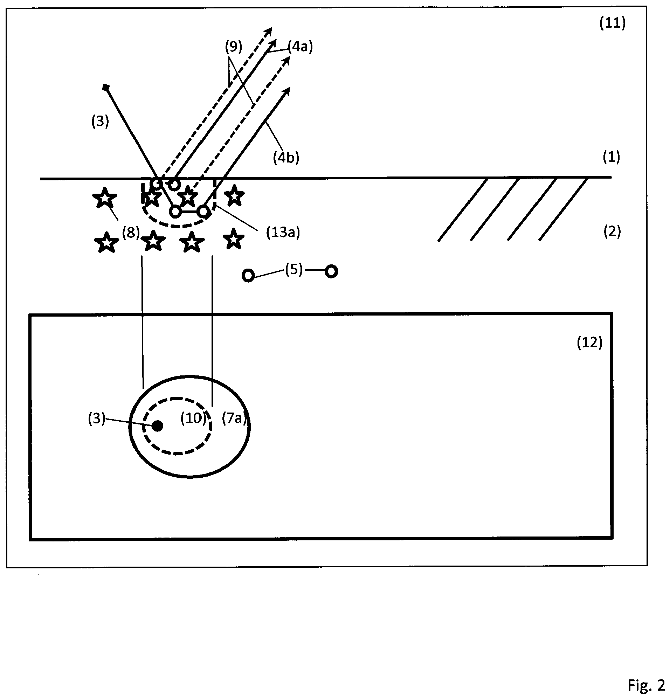

Dies wird in Fig. 2 erläutert: Die Anwesenheit von fluoreszenzfähigen Molekülen im Volumen 8 führt zur Anwesenheit von Absorption, diese verringert die Reichweite des Lichts im Zahn, weil es längs seines Weges absorbiert wird. Lange Lichtwege werden seltener, kurze Lichtwege sind von der Absorption weniger betroffen. Also wird das Licht der Wellenlänge λ1 im Durchschnitt nur eine Wegstrecke R1 zurücklegen, welche geringer ist als R0, das Punktbild 7a wird kleiner als das Punktbild 7 bei der Wellenlänge λ0, ohne Anwesenheit von Fluoreszenz im Volumen.

Zu dem Punktbild 7a bei der Wellenlänge λ1 tritt gleichzeitig ein zweites Punktbild 10 bei der Fluoreszenzwellenlänge λ2 auf.

Das Punktbild 10 für die Lichtstrahlen der Wellenlänge λ2 9 ist kleiner als das Punktbild 7a bei der Wellenlänge λ1. Der Grund dafür ist, dass die beim Fluoreszenzprozess im Volumen emittierten Photonen bereits eine zufällige Richtungsänderung erfahren haben und potentiell in der Lage sind, direkt, d.h. ohne weitere Streuung in die Pupille der Beobachtung zu gelangen. Photonen der Wellenlänge λ1, welche nicht absorbiert wurden, benötigen einen weiteren Streuprozess, welcher das Punktbild vergrößert. Also ist die Verbesserung des Punktbildes zwar bei beiden Wellenlängen vorhanden, aber bei der Wellenlänge λ2 stärker ausgeprägt.

Erfindungsgemäß erfolgt die Beobachtung bei der Wellenlänge λ2. Die tiefe Fluoreszenz im Inneren des Zahnes, also die Fluoreszenz des Volumens bzw. des lichtdurchströmten Volumens, führt also dazu, dass das Signalentstehungsvolumen 13a für Licht der Wellenlänge λ2 kleiner ist als im Fall ohne Fluoreszenz das Signalentstehungsvolumen 13 für Licht der Wellenlänge λ0; entsprechend genauer kann auf den Ort der Streuung zurückberechnet werden, also ist die Messung genauer als die Messung ohne Beteiligung von Fluoreszenz im Gewebe.

In allen Abbildungen werden für Lichtstrahlen der Wellenlänge λ1 durchgezogene Linien verwendet und für Lichtstrahlen der Wellenlänge λ2 unterbrochene Linien.

Die Erfindung hat gegenüber dem Stand der Technik den Vorteil der Verkleinerung des Punktbildes ohne Präparation des Zahnes.

In einigen Ausführungsformen werden mehrere im Volumen vorhandene Fluoreszenzwellenlängen kombiniert. So muss die Filterkennlinie eines optischen Filters im Strahlengang der Beleuchtungs- und Beobachtungseinrichtung nur jeweils um die Transmission in einem weiteren Spektralbereich erweitert zu werden, um zwei im Volumen vorhandene Fluoreszenzeffekte gleichzeitig nutzen zu können. Hierdurch addiert sich die Lichtausbeute beider Fluoreszenzeffekte, ohne dass dem System weitere Komponenten hinzugefügt werden müssen.

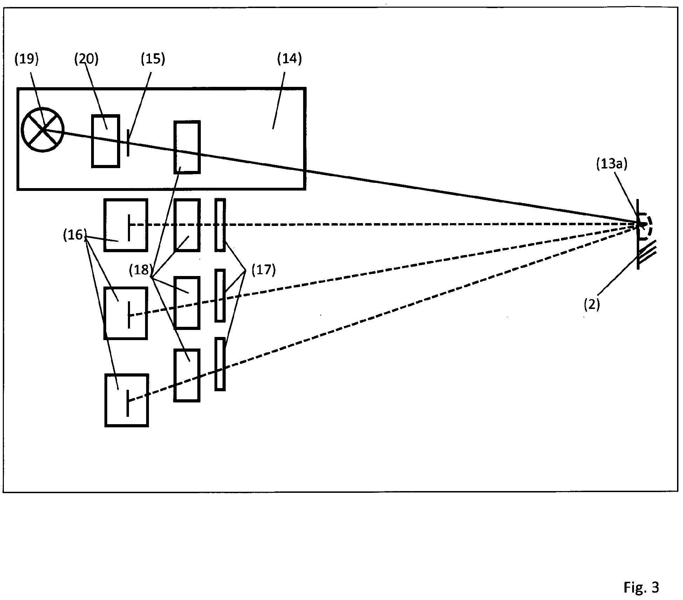

In einer Ausführungsform werden insbesondere die Höchstpunkte bei 380 und 410 nm, oder die Kombination beider verwendet, da diese für eine technische Nutzung in einer intraoralen 3D-Messung besonders interessant sind, weil die üblichen optischen Materialien verwendet werden können.
Es ist nicht notwendig, die Beleuchtungswellenlänge λ1 mit monochromatischem Licht zu erzeugen. Das Phänomen der Fluoreszenz findet grundsätzlich in einem charakteristischen Spektralbereich statt, dessen charakteristische Wellenlänge lediglich ein Optimum repräsentiert. Aus Gründen der Lichtausbeute wird bei der technischen Realisierung daher immer ein Spektralbereich um den Höchstpunkt herum verwendet. Für praktische Anwendungen ist ein Spektralbereich von ca. +/- 10nm notwendig, um eine ausreichende Lichtstärke zu gewährleisten.
Für den Höchstpunkt bei 380 nm kann somit die Beleuchtung im Spektralbereich 370-390 nm erfolgen. Für den Höchstpunkt bei 410 nm kann die Beleuchtung um Spektralbereich 400nm bis 420 nm erfolgen.
In einer Ausführungsform der Vorrichtung der Fig. 3 der Erfindung wird dies genutzt, um ein in der Dentalmedizin bekanntes Messverfahren zu verwirklichen, bei dem eine kleine PSF von besonderer Wichtigkeit ist: Das bekannte aktive Stereo- und Multi-Basislinien-Stereoverfahren benötigt ein feines Markierungsmuster, welches höher aufgelöst sein muss als die spätere 3D-Strukturauflösung des 3D-Messystems sein wird. In praktischen Fällen ist eine ca. 3-fach höhere Auflösung notwendig. Mit der Technologie der Nutzung der "Fluoreszenz in der Tiefe bzw. der Fluoreszenz des (lichtdurchströmten) Volumens" ist es möglich, ein solches Muster bei seiner Wechselwirkung mit dem Zahngewebe 2 mit hoher Auflösung zu erhalten.
Demgegenüber hat der in der deutschen Patentanmeldung DE 102007060263 beschriebene Scanner eine niedrigere Auflösung (soweit nicht mit Präparation gearbeitet wird), weil die beschriebene Technik nicht genutzt wird.

In der erfindungsgemäßen Vorrichtung kann die Beleuchtung mit einer LED 19 mit Kondensor 20 erfolgen, welche im Bereich 370nm-420 nm emittiert. Dies ergibt eine Beleuchtungseinheit, bei der ein Filter beim Projektor 14 auf der Beleuchtungsseite 14 entfallen kann. Der Projektor projiziert eine Maske 15 mit Markierungsmuster auf den Zahn. Wenn auch der mittlere Spektralbereich 390-400 nm mit keine oder geringe Fluoreszenz im Gewebe aufweist, so ist dieser unschädlich, weil er auf der Beobachtungsseite herausgefiltert wird.
Die Beobachtungseinheit umfasst mindestens zwei Videokameras 16 mit Objektiven 18, jedoch jeweils mit einem optischen Filter 17, die Wellenlängen unterhalb von 420 nm von der Beobachtung ausschließen.

In "Optische Eigenschaften von Zahnbein". Patent J.J. ten Bosch and J.R. Zijp. In: "Zahnbein und Zahnbeinreaktionen in der Mundhöhle", A. Thylstrup, S.A. Leach and V. Qvist, Hrsg. (IRL Press Ltd, Oxford, England, 1987) S. 59-65 wird die chemische Ursache der Fluoreszenz des Gewebes als unbekannt bezeichnet. Möglicherweise handelt es sich nicht um einen Effekt natürlicher Zähne, sondern um einen Effekt von ins Gewebe eingedrungener Bestandteile von Zahnpasta, die dort langfristig verblieben sind. Unter dem Begriff "Fluoreszenz im Gewebe von Zähnen bzw. in der Tiefe des Zahnes oder im Volumen des Zahnes" soll daher die Fluoreszenz im Gewebe von realen menschlichen Zähnen der heutigen Zeit, einschließlich von Umwelteinflüssen, verstanden werden.
Die Signalauswertung der von der Beobachtungseinheit aufgenommenen Signale kann in an sich bekannter Weise erfolgen.

### Verzeichnis der in den Abbildungen verwendeten Beschriftungen (Teil der Beschreibung)

1: Luft
2: Zahnmaterial
3: Lichtstrahl aus Beleuchtungssystem
4a 4b 4c: Gestreute Lichtstrahlen, welche in die Eintrittspupille der Beobachtung gelangen
5: Streuzentren mit geringer Dichte
6: mehrfach gestreuter Lichtstrahl
7: Punktbild zu (3)
7a: Punktbild zu (3), in Abwesenheit von Fluoreszenz, bei der Anregungswellenlänge
8: fluoreszenzfähige Moleküle im Volumen
9: Per Fluoreszenz emittierte Lichtstrahlen, welche in die Eintrittspupille der Beobachtung gelangen
10: Punktbild zu 3 bei der Fluoreszenzwellenlänge
11: Schnittansicht
12: Draufsicht
13: Signalentstehungsvolumen
14: Projektor für feine Muster, 370 bis 420 nm
15: Maske mit Markierungsmuster
16: Kameras
17: Filter
18: Objektive
19: LED (370-420 nm)
20:Kondensor

## Patentansprüche

1. Verfahren zur optischen dreidimensionalen Vermessung von Zähnen (2), mit den Schritten:
- Emittieren von Licht (3) im Bereich mindestens einer Anregungswellenlänge für Fluoreszenz, wobei die Anregungswellenlängen so gewählt wird, dass sie Gewebe und/oder Substanzen im Inneren menschlicher Zähne (2) zur Fluoreszenz anregt, so dass die Zähne (2) in ihrem Inneren aufgrund von Fluoreszenz Licht (3) im Bereich der Anregungswellenlängen absorbieren und Licht (4a, 4b) im Bereich mindestens einer Emissionswellenlänge emittieren,
- Erfassen von Licht (4a, 4b) als Fluoreszenzstrahlung im Bereich der mindestens einen Emissionswellenlänge zur Signalauswertung; und
- optisches dreidimensionales Vermessen der Zähne (2) mittels der erfassten Fluoreszenzstrahlung.

2. Verfahren nach Anspruch 1, **dadurch gekennzeichnet, dass** die mindestens eine Emissionswellenlänge eine oder mehrere der folgenden Gruppe sind: 350 nm, 400 nm, 450 nm und 520 nm.

3. Verfahren nach Anspruch 1 und/oder 2, **dadurch gekennzeichnet, dass** der Bereich der mindestens einen Emissionswellenlänge, in welchem Licht erfasst wird, ungefähr ± 30 nm, und vorzugsweise ± 20 nm, um die mindestens eine Emissionswellenlänge herum ist.

4. Verfahren nach einem oder mehreren der vorhergehenden Ansprüche, **dadurch gekennzeichnet, dass** die Beleuchtung im Spektralbereich 370 bis 420 nm, und vorzugsweise in den Spektralbereichen 370 bis 390 nm oder 400 nm bis 420 nm, erfolgt.

5. Verfahren nach einem oder mehreren der vorhergehenden Ansprüche, **dadurch gekennzeichnet, dass** der Bereich mindestens einer Anregungswelle für Fluoreszenz, in welchem Licht emittiert wird, und der Bereich der mindestens einen Emissionswellenlänge, in welchem Licht erfasst wird, disjunkt sind.

6. Verfahren nach einem oder mehreren der vorhergehenden Ansprüche, **dadurch gekennzeichnet, dass** eine optische Vermessung nach dem Stereoverfahren oder Multi-Basislinien-Stereoverfahren arbeitet, und dass ein feines Markierungsmuster projiziert wird.

7. Verfahren nach einem oder mehreren der vorhergehenden Ansprüche, **dadurch gekennzeichnet, dass** eine Filterkennlinie eines optischen Filters (17) im Strahlengang vor der Lichterfassung Transmission bei der mindestens einen Emissionswellenlänge aufweist.

8. Verfahren nach einem oder mehreren der vorhergehenden Ansprüche, **dadurch gekennzeichnet, dass** die Zähne (2) nicht präpariert sind.

9. Vorrichtung zur optischen dreidimensionalen Vermessung von Zähnen (2) mit
- einer Beleuchtungseinheit, die ausgebildet ist, Licht (3) im Bereich mindestens einer Anregungswellenlänge für Fluoreszenz zu emittieren, wobei die Anregungswellenlängen so gewählt ist, dass sie Gewebe und/oder Substanzen im Inneren menschlicher Zähne (2) zur Fluoreszenz anregt, so dass die Zähne (2) in ihrem Inneren aufgrund von Fluoreszenz Licht (3) im Bereich der Anregungswellenlängen absorbieren und Licht (4a, 4b) im Bereich mindestens einer Emissionswellenlänge emittieren,
- einer Beobachtungseinheit (16), die ausgebildet ist, Licht (4a, 4b) als Fluoreszenzstrahlung im Bereich der mindestens einen Emissionswellenlänge zur Signalauswertung zu erfassen; und
einer Rechen- und Auswerteeinheit zum optischen dreidimensionalen Vermessen der Zähne (2) mittels der erfassten Fluoreszenzstrahlung.

10. Vorrichtung nach Anspruch 9, **dadurch gekennzeichnet, dass** die mindestens eine Emissionswellenlänge eine oder mehrere der folgenden Gruppe sind: 350 nm, 400 nm, 450 nm und 520 nm.

11. Vorrichtung nach Anspruch 9 und/oder 10, **dadurch gekennzeichnet, dass** der Bereich der mindestens einen Emissionswellenlänge, in welchem Licht erfasst wird, ungefähr ± 30 nm, und vorzugsweise ± 20 nm, um die mindestens eine Emissionswellenlänge herum ist.

12. Vorrichtung nach einem oder mehreren der vorhergehenden Ansprüche 9 bis 11, **dadurch gekennzeichnet, dass** die Beleuchtungseinheit im Spektralbereich 370 bis 420 nm, und vorzugsweise in den Spektralbereichen 370 bis 390 nm oder 400 nm bis 420 nm, emittiert.

13. Vorrichtung nach einem oder mehreren der vorhergehenden Ansprüche 9 bis 12, **dadurch gekennzeichnet, dass** der Bereich mindestens einer Anregungswelle für Fluoreszenz, in welchem Licht emittiert wird, und der Bereich der mindestens einen Emissionswellenlänge, in welchem Licht erfasst wird, disjunkt sind.

14. Vorrichtung nach einem oder mehreren der vorhergehenden Ansprüche 9 bis 13, **dadurch gekennzeichnet, dass** eine optische Vermessung nach dem Stereoverfahren oder Multi-Basislinien-Stereoverfahren arbeitet, und dass die Beobachtungseinheit (16) ein feines Markierungsmuster projiziert.

15. Vorrichtung nach einem oder mehreren der vorhergehenden Ansprüche 9 bis 14, **dadurch gekennzeichnet, dass** eine Filterkennlinie eines optischen Filters (17) im Strahlengang vor der Beobachtungseinheit (16) Transmission bei der mindestens einen Emissionswellenlänge aufweist.

## Claims

1. Method for optically three-dimenensionally measuring teeth (2), comprising the hollowing steps:
- emitting light (3) in the range of at least one excitation wavelength for fluorescence, the excitation wavelengths being selected in such a way that they excite tissue and/or substances in the interior of human teeth (2) to fluoresce such that, in the interior thereof, the teeth (2) absorb light (3) in the range of the excitation wavelengths as a result of fluorescence and emit light (4a, 4b) in the range of at least one emission wavelength, and
- detecting light (4a, 4b) as fluorescence radiation in the range of the at least one emission wavelength for signal evaluation purposes; and
- optically three-dimensionally measuring of the teeth (2) using the detected fluorescence radiation.

2. Method according to Claim 1, **characterized in that** the at least one emission wavelength is one or more of the following groups: 350 nm, 400 nm, 450 nm and 520 nm.

3. Method according to Claim 1 and/or 2, **characterized in that** the range of the at least one emission wavelength, in which light is detected, is approximately 130 nm, and preferably ±20 nm, around the at least one emission wavelength.

4. Method according to one or more of the preceding claims, **characterized in that** the illumination takes place in the spectral range of 370 to 420 nm and preferably in the spectral ranges of 370 to 390 nm or 400 nm to 420 nm.

5. Method according to one or more of the preceding claims, **characterized in that** the range of at least one excitation wave for fluorescence, in which light is emitted, and the range of the at least one emission wavelength, in which light is detected, are disjointed.

6. Method according to one or more of the preceding claims, **characterized in that** an optimal measurement operates according to the stereo method or multi-baseline-stereo method, and **in that** a fine marking pattern is projected.

7. Method according to one or more of the preceding claims, **characterized in that** a filter characteristic of an optimal filter (17) in the beam path upstream of the light detection transmits at the at least one emission wavelength.

8. Method according to one or more of the preceding claims, **characterized in that** the teeth (2) have not been prepared.

9. Device for optically three-dimenensionally measuring teeth (2), comprising
- an illumination unit, which is configured to emit light (3) in the range of at least one excitation wavelength for fluorescence, the excitation wavelengths being selected in such a way that they excite tissue and/or substances in the interior of human teeth (2) to fluoresce such that, in the interior thereof, the teeth (2) absorb light (3) in the range of the excitation wavelengths as a result of fluorescence and emit light (4a, 4b) in the range of at least one emission wavelength,
- an observation unit (16), which is configured to detect light (4a, 4b) as fluorescence radiation in the range of the at least one emission wavelength, for signal evaluation purposes; and
- a computation and evaluation unit for optically three-dimensionally measuring of the teeth (2) using the detected fluorescence radiation.

10. Device according to claim 9, **characterized in that** the at least one emission wavelength is one or more of the hollowing groups: 350 nm, 400 nm, 450 nm and 520 nm.

11. Devise according to Claim 9 and/or 10, **characterized in that** the range of the at least one emission wavelength, in which light is detected, is approximately ±30 nm, and preferable ±20 nm, around the at least one emission wavelength.

12. Device according to one or more of the preceding Claims 9 to 11, **characterized in that** the illumination unit emits in the spectral range of 370 to 420 nm and preferably in the spectral ranges of 370 to 390 nm or 400 nm to 420 nm.

13. Device according to one or more of the preceding Claims 9 to 12, **characterized in that** the range of at least one excitation wave for fluorescence, in which light is emitted, and the range of the at least one emission wavelength, in which light is detected, are disjointed.

14. Device according to one or more of the preceding Claims 9 to 13, **characterized in that** an optical measurement operates according to the stereo method or multi-baseline-stereo method, and **in that** the observation unit (16) projects a fine marking pattern.

15. Device according to one or more of the preceding Claims 9 to 14, **characterized in that** a filter characteristic of an optical filter (17) in the beam path supstream of the observation unit (16) transmits at the at least one emission wavelength.

## Revendications

1. Procédé servant à mesurer de manière optique et tridimensionnelle des dents (2), comprenant les étapes suivantes :
- rémission de lumière (3) dans la plage au moins d'une longueur d'onde d'excitation pour la fluorescence, dans lequel les longueurs d'onde d'excitation sont choisies de telle sorte qu'elles provoquent la fluorescence de tissus et/ou substances à l'intérieur de dents (2) humaines si bien que les dents (2) absorbent, dans leur intérieur, du fait de la fluorescence, de la lumière (3) dans la plage des longueurs d'onde d'excitation et émettent de la lumière (4a, 4b) dans la plage au moins d'une longueur d'onde d'émission ;
- la détection de lumière (4a, 4b) en tant que rayonnement fluorescent dans la plage de l'au moins une longueur d'onde d'émission aux fins de l'évaluation de signaux :
- la mesure optique tridimensionnelle des dents (2) au moyen du rayonnement fluorescent détecté.

2. Procédé selon la revendication 1, **caractérisé en ce que** l'au moins une longueur d'onde d'émission est une ou plusieurs des groupes qui suivent : 350 nm, 400 nm, 450 nm et 520 nm.

3. Procédé selon la revendication 1 et/ou 2, **caractérisé en ce que** la plage de l'au moins une longueur d'onde d'émission, dans laquelle la lumière est détectée, est, tout autour de l'au moins une longueur d'onde d'émission, environ de ± 30 nm, et de préférence ± 20 nm.

4. Procédé selon l'une quelconque ou plusieurs des revendications précédentes, **caractérisé en ce que** l'éclairage est effectué dans la plage spectrale allant de 370 à 420 nm, et de préférence dans les plages spectrales allant de 370 à 390 nm ou de 400 nm à 420 nm.

5. Procédé selon l'une quelconque ou plusieurs des revendications précédentes, **caractérisé en ce que** la plage au moins d'une onde d'excitation de fluorescence, dans laquelle de la lumière est émise, et la plage de l'au moins une longueur d'onde d'émission, dans laquelle de la lumière est détectée, sont disjointes.

6. Procédé selon l'une quelconque ou plusieurs des revendications précédentes, **caractérisé en ce qu'**une mesure optique fonctionne selon le procédé stéréo ou selon le procédé stéréo à lignes de base multiples, et **en ce qu'**un motif de marquage fin est projeté.

7. Procédé selon l'une quelconque ou plusieurs des revendications précédentes, **caractérisé en ce qu'**une ligne caractéristique de filtre d'un filtre (17) optique présente dans la marche des rayons, avant la détection de lumière, une transmission dans le cas de l'au moins une longueur d'onde d'émission.

8. Procédé selon l'une quelconque ou plusieurs des revendications précédentes, **caractérisé en ce que** les dents (2) ne sont pas préparées.

9. Dispositif servant à mesurer de manière optique et tridimensionnelle des dents (2), comprenant :
- une unité d'éclairage, qui est réalisée pour émettre de la lumière (3) dans la plage au moins d'une longueur d'onde d'excitation pour de la fluorescence, dans lequel les longueurs d'onde d'excitation sont choisies de telle sorte qu'elles provoquent la fluorescence de tissus et/ou substances à l'intérieur de dents (2) humaines si bien que les dents (2) absorbent, dans leur intérieur, du fait de la fluorescence, de la lumière (3) dans la plage des longueurs d'onde d'excitation et émettent de la lumière (4a, 4b) dans la plage au moins d'une longueur d'onde d'émission ;
- une unité d'observation (16), qui est réalisée pour détecter de la lumière (4a, 4b) en tant que rayonnement fluorescent dans la plage de l'au moins une longueur d'onde d'émission aux fins de l'évaluation de signaux ; et
- une unité de calcul et d'évaluation servant à mesurer de manière optique et tridimensionnelle les dents (2) au moyen du rayonnement fluorescent détecté.

10. Dispositif selon la revendication 9, **caractérisé en ce que** l'au moins une longueur d'onde d'émission est un ou plusieurs des groupes qui suivent : 350 nm, 400 nm, 450 nm et 520 nm.

11. Dispositif selon la revendication 9 et/ou 10, **caractérisé en ce que** la plage de l'au moins une longueur d'onde d'émission, dans laquelle de la lumière est détectée, est tout autour de l'au moins une longueur d'onde d'émission, d'environ ± 30 nm, de préférence ± 20 nm.

12. Dispositif selon l'une quelconque ou plusieurs des revendications précédentes 9 à 11, **caractérisé en ce que** l'unité d'éclairage émet dans la plage spectrale allant de 370 à 420 nm, et de préférence dans les plages spectrales allant de 370 à 390 nm ou de 400 nm à 420 nm.

13. Dispositif selon l'une quelconque ou plusieurs des revendications précédentes 9 à 12, **caractérisé en ce que** la plage au moins d'une onde d'excitation de fluorescence, dans laquelle de la lumière est émise, et la plage de l'au moins une longueur d'onde d'émission, dans laquelle de la lumière est détectée, sont disjointes.

14. Dispositif selon l'une quelconque ou plusieurs des revendications précédentes 9 à 13, **caractérisé en ce qu'**une mesure optique fonctionne selon le procédé stéréo ou selon le procécé stéréo à lignes de base multiples, et **en ce que** l'unité d'observation (16) projette un motif de marquage fin.

15. Dispositif selon l'une quelconque ou plusieurs des revendications précédentes 9 à 14, **caractérisé en ce qu'**une ligne caractéristique de filtre d'un filtre (17) optique présente, dans la marche des rayons, avant l'unité d'observation (16), une transmission dans le cas de l'au moins une longueur d'onde d'émission.
